# EUROPEAN PATENT SPECIFICATION

(11) **EP 0 541 350 B1**
(45) Date of publication and mention of the grant of the patent: **22.05.1996**
(21) Application number: 92310101.8
(22) Date of filing: 04.11.1992
(51) Int. Cl.: H02G 9/10, E02D 29/14

(54) **Inspection pit, lid and inspection pit assembly**
Inspektionsloch, Deckel und Zusammenbau eines Inspektionslochs
Trou d'inspection, couvercle et assemblage d'un trou d'inspection

(30) Priority: 06.11.1991 GB 9123547
(43) Date of publication of application: 12.05.1993
(73) Proprietor: W J FURSE & CO LTD, Nottingham NG2 1EB (GB)
(72) Inventor: Bilbie, John Leslie, Beeston, Nottingham NG9 2ES (GB); Hall, Trevor, Oakham, Leicestershire LE15 6NU (GB)
(74) Representative: Gilding, Martin John

(56) References cited:
- EP-A- 0 277 587
- EP-A- 0 388 126
- DE-A- 3 008 776
- GB-A- 2 226 343
- US-A- 3 858 755

## Description

This invention relates to a lid, particularly a lid suitable for use with an inspection pit assembly and especially with an inspection pit assembly suitable for use in the provision of an earth in association with lightning conductors and the like. For example, as described in our copending UK Patent Application Publication No GB-2226343 A.

In the earthing of conductors associated with buildings, for example, it is necessary to have an earthing rod or other earthing medium to which access can be gained for connection of conductors to provide a suitable electrical path. To facilitate such access, it is common practice to provide an inspection pit recess into the ground around the earthing rod. Known inspection pits may be made of various materials, for example cast concrete, galvanised iron or the like and are supplied by the applicants. Whilst such inspection pits are satisfactory, generally, in performance, the concrete inspection pits are heavy and bulky and thus difficult to handle and transport, whilst the galvanised steel inspection pits may, over a period of time, corrode.

Lids, especially lids to inspection pits, are also commonly cast from reinforced concrete or galvanised metal; similar weight and/or possible corrosion problems may arise.

The US patent US-A-3 858 755 discloses a meter box with a lid integrally moulded of a rigid plastics material, whose structure comprises an outer portion, a continuous rim portion projecting from an under face of the outer portion and extending substantially around the periphery of the outer portion, and a plurality of reinforcing ribs projecting from the under face of the outer portion.

It is one of the objects of the present invention to provide an improved lid, suitable for use with an inspection pit.

The invention provides a lid comprising a structure integrally moulded of a rigid plastics material comprising an outer portion, a continuous rim portion projecting from an under face of the outer portion and extending substantially around the periphery of the outer portion and a plurality of reinforcing ribs projecting from the under face of the outer portion, the ribs comprising a plurality of first ribs extending radially from a boss projecting from the under face at a central region of the structure to the rim and a plurality of second ribs extending towards the rim from a junction region of a first rib between the boss and the rim, two such second ribs extending from each junction region one at either side of the first rib and each of said two second ribs being positioned at the same angle relative to the associated first rib.

Preferably in a lid in accordance with the invention the junction regions are situated at the same radial distance from the central boss and second ribs radiating from the junction regions of adjacent first ribs meet at a meeting position between the central boss and the rim, the lid further comprising a plurality of third ribs extending from the meeting positions to the rim, preferably extending radially to the central boss. Preferably the periphery of the outer portion projects slightly beyond the rim and in that case some, at least, of the ribs extend beyond the rim.

In one embodiment a lid in accordance with the invention comprises a generally rectangular cover portion, e.g. a square cover portion, and the rim is elliptical or circular in plan.

Preferably a lid in accordance with the invention is suitable use in an inspection pit assembly and has at least one first opening in a cover portion adapted to receive a fastening bolt for use in securing the lid to an inspection pit, the bolt having a shank and a head, and at least one key-hole shaped second opening having a first portion through which the head of the bolt can pass and a second portion into which the shank of the bolt can slide, the head dimension being such that the head cannot pass through the second portion, whereby the bolt can be used to lift the lid out of engagement with the inspection pit.

In another aspect the invention may be considered to provide a method of making a lid according to the invention comprising procuring a mould assembly comprising a first mould part having a cavity defining the outer surface of the outer portion of said lid structure and meeting a second mould part having a cavity defining the under surface of the outer portion and the remained of the lid structure, injecting a plastics material in flowable condition into the part of the mould cavity defining the central boss, to fill the mould cavity, causing or allowing the injected material to harden, and removing the structure from the mould assembly.

The lid in accordance with the invention is moulded from a suitable rigid plastics material; conveniently the plastics material is reinforced by a suitable fibre, for example glass fibre. The plastics material may comprise any suitable rigid polymer, for example polypropylene.

There now follows a detailed description to be read with reference to the accompanying drawings of an inspection pit assembly, comprising a lid embodying the invention. It will be realised that this inspection pit assembly has been selected for description to illustrate the invention by way of example.

In the accompanying drawings:-
Figure 1 is a plan view of an inspection pit assembly, showing the inspection pit and lid embodying the invention;
Figure 2 is a view in section on the line A-A of Figure 1;
Figure 3 is an underneath view of the lid embodying the invention;
Figure 4 is a plan view showing part of the inspection pit; and

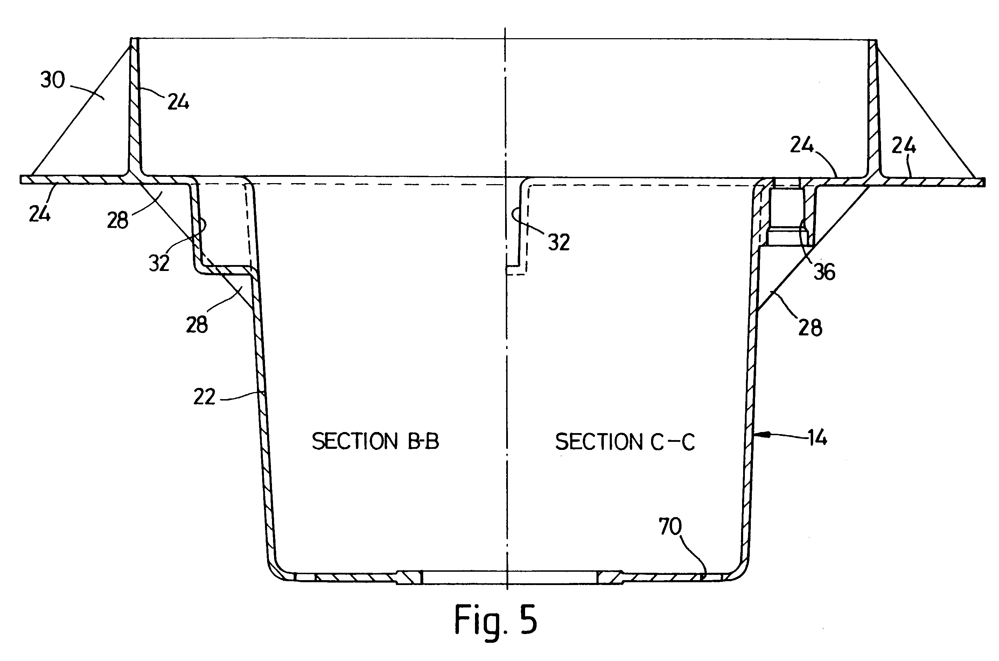

Figure 5 is a view in section on the lines B-B and C-C of Figure 4.

The inspection pit assembly (10) comprises a lid (12) and an inspection pit (14).

The inspection pit comprises a body portion (16) integrally moulded of a rigid plastics material, e.g. glass fibre reinforced polymer, e.g. polypropylene, for example by injection moulding. The body portion (16) having a bottom (18) and an opening (20) in the bottom (18) to provide access to the interior of the pit, for example for an earth rod (not shown). A continuous wall (22) is upstanding from the bottom (18) to an open, upper end. At the open upper end, remote from the bottom (18), a flange (24) projects outwardly from the wall (22). Within the outer periphery of the flange (24), a rim (26) which is also continuous, extends around the opening. Reinforcing strut means comprising first reinforcing struts (28) extending between the wall (22) and flange (24), and second reinforcing struts (30) extending between the flange (24) and rim (26) are provided. The struts (28, 30) are planar members which are positioned perpendicular to the flange (24) and to the wall (22) and rim (26), respectively.

Two pockets (32) are formed adjacent the opened end of the body portion at opposite sides of the body portion (16) providing recesses in the rim (24) and in the wall (22) opening into the interior of the body portion (16). End portions of an earth bar (34), which extends across the body portion (16) from one side to the other, are slidingly received in the pockets (32) whereby to position the earth bar (34) in the body portion. The earth bar (34) may suitably provide means for connecting a plurality of conductors to an earth rod entering the inspection pit through the opening (20).

The body portion (16) further comprises recesses (36) opening to the flange at an upper surface at one end and opening below the flange at the other end, the recesses (36) having nuts (38) received therein for cooperation with bolts (40) which are used to retain the lid (12) in position. Caps (42) may be a press fit in the recess (36) to prevent entry of dirt into the recess (36).

The lid (12) comprises a structure integrally moulded of a rigid plastics material (of a composition which may be similar to the material from which the inspection pit (14) is moulded; the lid is moulded by a method embodying the invention as will be discussed below. The lid comprises an outer, cover portion (44), a rim portion (46) projecting from an underface (48) of the cover portion (44), and extending substantially around the periphery of the cover portion (44).

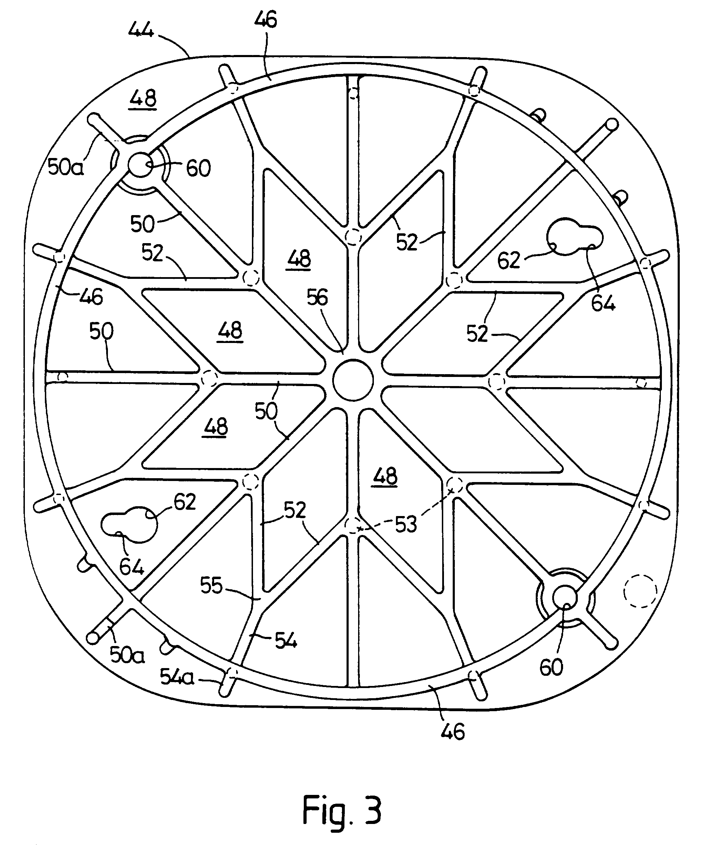

A plurality of reinforcing ribs (50, 52, 54) projecting from the underface (48) of the cover portion (44). The ribs comprise a plurality of first ribs (50) extending radially from a central boss projecting from the underface (48) of a central region of the lid structure. The first ribs (50) extend from the boss to the rim (46). A plurality of second ribs (52) extend generally towards the rim (46) from junction regions (53) of the first ribs (50). The junction regions (53) are situated at the same radial distance from the central boss (56). Two second ribs (52) extend from each junction region (51) at either side of the first rib (50); each of these two second ribs are positioned at the same angle relative to the first rib. Second ribs (52) radiating from the junction regions (52) of adjacent first ribs meet at a meeting position (55) between the central boss (56) and the rim (46). The third ribs (54) extend radially of the boss (56) from the meeting positions (55) to the rim (46). Certain of the first ribs (50) and third ribs (54) have portions (50a) respectively, which project beyond the rim (46). As can be seen viewing Figure 3, the cover portion (44) is generally square in plan, while having rounded corners, and the rim (46) is circular in plan.

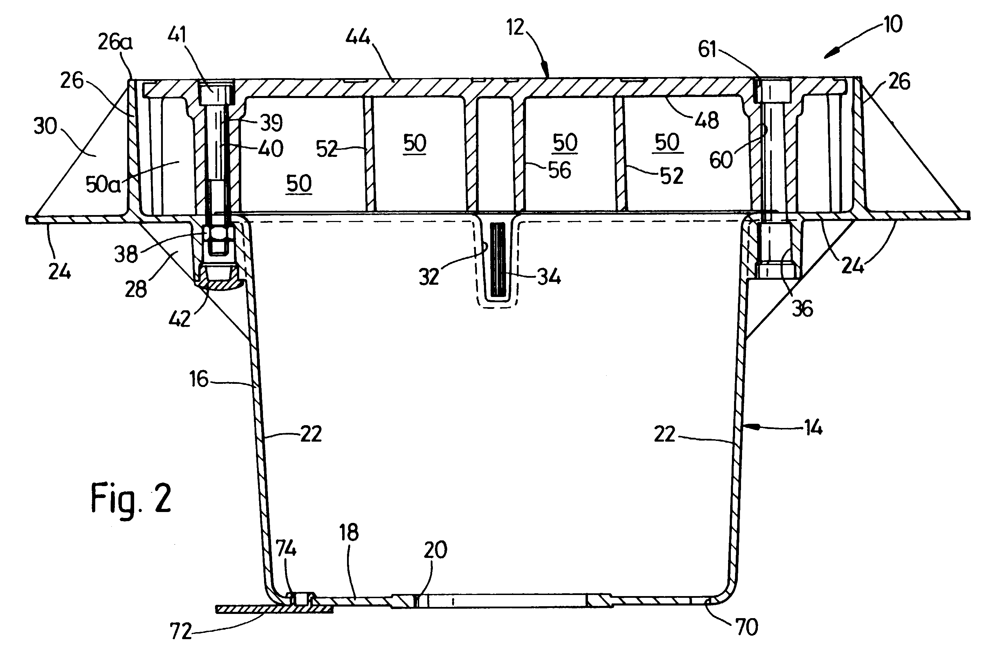

A desired number of tags (72) of a suitable rigid material, e.g. similar to the material of the pit (10), may be secured to the bottom (18) of the pit (10). The tags (72) may be secured by any suitable means, e.g. rivets. In the illustrative pit (10), holes (70) are formed in corner regions of the bottom and the tags (72) are moulded with integral plastics pegs (74) dimensioned to be a snap fit in the holes (70) (see Figure 2); if desired, the part of the peg (74) within the pit may be treated by heat and pressure after installation, forming a head (not shown) preventing removal. Each tag (72) may be swung about the axis of its peg (74) between an outwardly projecting position (shown in Figure 2) for use and an inwardly directed position in which it is positioned beneath the bottom of the pit: in that position the tags (72) do not interfere with the stacking of pits (10) one within another which is convenient for supply purposes. As can be seen from the drawings the wall (22) flares (slightly) outwardly from the bottom (18) thus facilitating stacking.

In the manufacture of the illustrative lid (12), a mould assembly (not shown) is used, the assembly comprising a first mould part having a cavity defining an outer surface (47) of the cover portion (44) of the lid structure (12) and meeting a second mould part at a parting line, the second mould part having a cavity defining the underface (48) of the cover and the remainder of the lid structure including the ribs (50, 52, 54), boss (56) and rim (46). In further carrying out the method a suitable rigid plastics material, for example similar to that used for the inspection pit, is injected in flowable condition into the part of the mould cavity which defines the central boss (56), thus to fill the cavity. The injected material is thereafter caused or allowed to harden and the structure removed from the mould assembly.

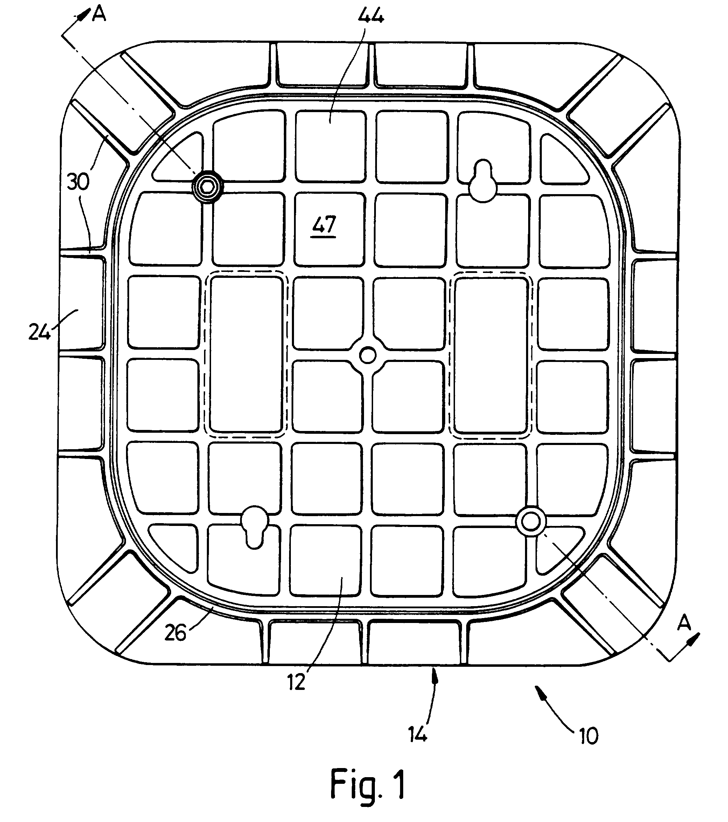

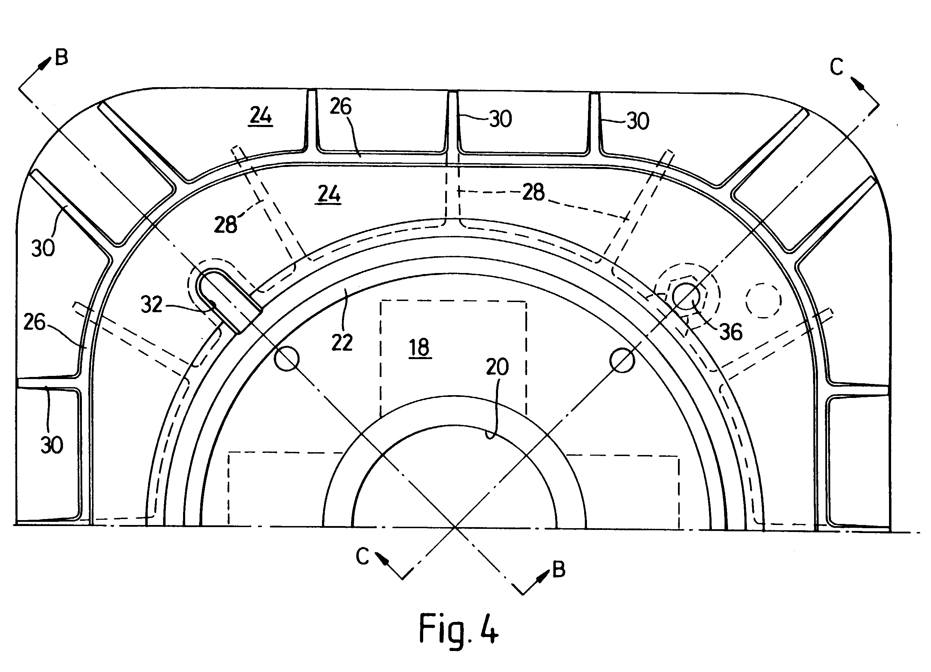

As can be seen viewing Figure 1, the outer periphery of the cover portion (44) of the lid (12) is complementary with the inner wall of the rim (26) of the inspection pit so that the lid seats on the flange (24), within the rim (26), with the outer periphery of the cover portion (44) closely spaced from the internal wall of the rim (26). The portions (50a, 54a) of the ribs projecting beyond the rim (46) of the lid (12) serve to support the part of the cover portion (44) projecting beyond the rim portion (46) and also to guide the lid as it is inserted into the opening defined by the rim (26) of the inspection pit. As can be seen viewing Figures 3 and 4, the rim (46) and the wall (22) of the inspection pit are both circular in plan; it will, however, be understood that the rim (46) and wall (22) may be of any desired shape in plan. However it is preferred that the wall (22) of the inspection pit and the rim portion (46) of the lid have the same shape as one another, in plan.

The lid (12) is provided with openings (60) extending through the lid (12) and positioned to be in alignment with the recesses (36) in the inspection pit, when the lid is correctly located on the inspection pit within the opening defined by the rim (26). The inspection pit assembly (10) comprising the lid (12) and the inspection pit (14) are secured together by means of bolts (40) having a shank (39) and head (41), the head (41) being accommodated in a part (61) of the opening (60) of larger diameter than the remainder of the opening (60). The lid (12) is provided with two key-hole shaped second openings, each having a first portion (62) through which the head (41) of the bolt (40) can pass, and a second portion (64) into which the shank (39) of the bolt can slide. The dimensions of the head (41) are such that the head (41) cannot pass through the second portion (64). Thus, when it is desired to remove the lid (12) from engagement with the inspection pit (14), the bolts (40) are first unscrewed and removed from the openings (60) and then inverted so that the heads (41) are facing downwardly. The heads (41) are then inserted through the first portions (62) of the key-hole shaped openings and the bolt slid sideways so that the shank passes into the second portion (64) of the key-hole shaped openings. The bolts can then be used to lift the lid (12) out of engagement with the inspection pit (14). The inspection pit is relatively light compared with many previously known inspection pit assemblies and sufficiently strong for use in many purposes. It is readily manufactured by two simple injection moulding operations and is corrosion resistant. Furthermore, the body portion of the inspection pit itself is substantially resistant to penetration by moisture and can be used in apparatus as described in our above mentioned copending patent application.

The configuration of reinforcing ribs on the inspection pit provides substantial support for the flange (24) and for the rim (26). The reinforcing ribs of the lid (12) are so arranged as to give rigidity to the lid, resisting bending or damage even under substantial loads and, furthermore, are arranged so that the lid can be manufactured very simply using a relatively simple two-part mould, in an injection moulding operation.

In use, the inspection pit (10) is received in a hole of suitable depth in the ground. Suitably concrete is poured around the pit and allowed to harden to secure the pit in position. Suitably the concrete is level with the uppermost edge (26a) of the rim (26) and the flange (24) and ribs (28, 30) are encompassed by the concrete so that the rim (26) is given very strong support by the concrete and the pit (10) is firmly secured. To ensure stability during pouring of the concrete, if necessary, the tags (72) may be positioned projecting outwardly as shown in Figure 2: sufficient weight is initially placed on the tags (72) to prevent the pit (10) "floating" in the concrete as concrete is poured round the pit (10).

## Claims

1. A lid (12) comprising a structure integrally moulded of a rigid plastics material comprising an outer portion (44), a continuous rim portion (46) projecting from an under face (48) of the outer portion (44) and extending substantially around the periphery of the outer portion and a plurality of reinforcing ribs projecting from the under face of the outer portion (44), the ribs comprising a plurality of first ribs (50) extending radially from a boss (56) projecting from the under face at a central region of the structure to the rim (46) and a plurality of second ribs (52) extending towards the rim from a junction region (53) of a first rib (50) between the boss (56) and the rim, two such second ribs (52) extending from each junction region (53) one at either side of the first rib (50) and each of said two second ribs (52) being positioned at the same angle relative to the associated first rib (50).

2. A lid according to claim 1 wherein the junction regions are situated at the same radial distance from the central boss and second ribs radiating from the junction regions of adjacent first ribs meet at a meeting position between the central boss and the rim, the lid comprising a plurality of third ribs extending from the meeting positions to the rim.

3. A lid according to claim 2 wherein the third ribs extend radially to the central boss.

4. A lid (12) according to any one of the preceding claims suitable for use in an inspection pit assembly the lid having at least one first opening (60) in a cover portion adapted to receive a fastening bolt (40) received in the first opening for use in securing the lid to an inspection pit (14), the bolt having a shank (39) and a head (41), and at least one key-hole shaped second opening (62,64) having a first portion (62) through which the head of the bolt can pass and a second portion (64) into which the shank of the bolt can slide, the head dimension being such that the head cannot pass through the second portion, whereby the bolt can be used to lift the lid out of engagement with the inspection pit.

5. A method of making a lid according to any one of the preceding claims comprising procuring a mould assembly comprising a first mould part having a cavity defining the outer surface of the outer portion of said lid structure and meeting a second mould part having a cavity defining the under surface of the outer portion and the remainder of the lid structure, injecting a plastics material in flowable condition into the part of the mould cavity defining the central boss, to fill the mould cavity, causing or allowing the injected material to harden, and removing the structure from the mould assembly.

## Patentansprüche

1. Deckel (12) mit einer materialeinheitlich aus einem steifen Kunststoff geformten oder gegossenen Struktur, umfassend: einen Außenteil (44), einen von einer Unterseite (48) des Außenteils (44) (nach unten) abstehenden und im wesentlichen um den Umfang des Außenteils herum verlaufenden, durchgehenden Randstegteil (46) sowie mehrere von der Unterseite des Außenteils (44) abstehende Versteifungsrippen, wobei die Rippen eine Anzahl erster Rippen (50), die von einer von der Unterseite in einem zentralen Bereich der Struktur (nach unten) abstehenden Nabe (56) radial zum Randsteg(teil) (46) hin verlaufen, und eine Anzahl zweiter Rippen (52) umfassen, die von einem Abzweigbereich (53) (von) einer ersten Rippe (50) zwischen der Nabe (56) und dem Randsteg in Richtung auf den Randsteg verlaufen, wobei zwei solche zweite Rippen (52) von jedem Abzweigbereich (53) jeweils auf einer Seite der ersten Rippe (50) abgehen und jede der beiden zweiten Rippen (52) unter dem gleichen Winkel relativ zur zugeordneten ersten Rippe (50) angeordnet ist.

2. Deckel nach Anspruch 1, wobei die Abzweigbereiche in gleichen Radialabständen von der zentralen Nabe angeordnet sind und von den Abzweigbereichen der angrenzenden ersten Rippen abgehende zweite Rippen einander in einer Vereinigungsposition zwischen der zentralen Nabe und dem Randsteg treffen, wobei der Deckel ferner eine Anzahl dritter Rippen aufweist, die von den Vereinigungspositionen zum Randsteg verlaufen.

3. Deckel nach Anspruch 2, wobei die dritten Rippen zur zentralen Nabe radial verlaufen.

4. Deckel (12) nach einem der vorangehenden Ansprüche mit Eignung zur Verwendung bei einer Inspektionslochanordnung, welcher Deckel umfaßt: mindestens eine in einem Deckteil vorgesehene erste Öffnung (60) zum Aufnehmen eines in die erste Öffnung eingeführten Befestigungsschraubbolzens (40) für Befestigung des Deckels an einem Inspektionsloch (bzw. einer Arbeitsgrube) (14), welcher Schraubbolzen einen Schaft (39) und einen Kopf (41) aufweist, und mindestens eine schlüssellochförmige zweite Öffnung (62, 64) mit einem ersten Abschnitt (62), den der Kopf des Schraubbolzens zu passieren vermag, und einem zweiten Abschnitt (64), in welchen (welchem) der Schaft des Schraubbolzens verschiebbar ist, wobei der Kopf so bemessen ist, daß er den zweiten Abschnitt nicht zu passieren vermag, so daß der Schraubbolzen zum Herausheben des Deckels aus seinem Einsetzzustand im Inspektionsloch benutzbar ist.

5. Verfahren zur Herstellung eines Deckels nach einem der vorangehenden Ansprüche, umfassend die folgenden Schritte: Bereitstellen einer (Spritz-)Gießformanordnung mit einem ersten Formteil, der einen die Außenfläche des Außenteils der Deckelstruktur festlegenden Formraum aufweist und der an einem zweiten Formteil anliegt, welcher seinerseits einen die Unterseite des Außenteils und den Rest der Deckelstruktur festlegenden Formraum aufweist, Einspritzen eines Kunststoffs in fließfähigem Zustand in den die zentrale Nabe festlegenden Teil des Formraums zum Füllen des Formraums, Aushärten oder Aushärtenlassen des eingespritzten Materials und Entnehmen (Entformen) der Struktur aus der Gießformanordnung.

## Revendications

1. Couvercle (12) composé d'une structure moulée d'une seule pièce dans un matériau plastique rigide, comprenant une portion extérieure (44), une portion à rebord continu (46) se projetant depuis une face inférieure (48) de la portion extérieure (44), et s'étendant sensiblement autour de la périphérie de la portion extérieure, et une pluralité de profils de renforcement s'étendant depuis la face inférieure de la portion extérieure (44), les profils étant composés d'une pluralité de premiers profils (50) s'étendant radialement depuis une protubérance (56) se projetant depuis la face inférieure en une zone centrale de la structure vers le profil (46), et d'une pluralité de seconds profils (52) s'étendant vers le rebord, depuis une région de jonction (53) d'un premier profil (50) entre la protubérance (56) et le rebord, deux seconds profils (52) identiques s'étendant depuis chaque région de jonction (53), un profil se trouvant de chaque côté du premier profil (50), et chacun desdits seconds profils (52) étant positionné suivant le même angle par rapport au premier profil associé (50).

2. Couvercle (12) selon la revendication 1, caractérisé en ce que les régions de jonction sont situées à la même distance radiale de la protubérance centrale, et en ce que les seconds profils rayonnant depuis les régions de jonction des premiers profils adjacents se rejoignent en une position de rencontre entre la protubérance centrale et le rebord, le couvercle comprenant une pluralité de troisièmes profils s'étendant depuis les positions de rencontre vers le rebord.

3. Couvercle (12) selon la revendication 2, caractérisé en ce que les troisièmes profilS S'étendent radialement vers la protubérance centrale.

4. Couvercle (12) selon l'une quelconque des revendications précédentes, pouvant être utilisé dans un assemblage de trou d'inspection, le couvercle ayant au moins une promière ouverture (60) dans une portion de couverture conçue pour recevoir un boulon de fixation (40) logé dans une première ouverture, utilisable pour fixer le couvercle sur un trou d'inspection (14), le boulon étant doté d'un corps (39) et d'une tête (41), et au moins une seconde ouverture (62, 64) en forme de trou de serrure ayant une première portion (62) à travers laquelle la tête du boulon peut passer, et une seconde portion (64) dans laquelle Le corps du boulon peut coulisser, la dimension de la tête étant telle que la tête ne peut pas traverser la seconde portion, d'où il résulte que le boulon peut être utilisé pour dégagar le couvercle du trou d'inspection.

5. Procédé de fabrication d'un couvercle selon, l'une quelconque des revendications précédentes, comprenant les étapes d'approvisionnement d'un assemblage de moulage composé d'une première partie ayant une cavité définissant la surface extérieure de la portion extérieure de ladite structure de couvercle, et s'engageant dans une seconde partie de moule, ayant une cavité définissant la surface inférieure de la portion extérieure et du reste de la structure de couvercle, d'injection d'un matériau plastique dans une condition fluide, dans la partie de la cavité du moule définissant la protubérance centrale, pour emplir la cavité du moule, de durcissement provoqué ou autorisé du matériau injecté, et de retrait de la structure de l'assemblage de moulage.
